# EUROPEAN PATENT APPLICATION

(11) **EP 1 122 682 A1**
(43) Date of publication of application: **08.08.2001**
(21) Application number: 00102409.0
(22) Date of filing: 04.02.2000
(51) Int. Cl.: G06K 11/18

(54) **Computer input device**

(71) Applicant: Wei, Meng-Yu, Taipei (TW)
(72) Inventor: Wei, Meng-Yu, Taipei (TW)
(74) Representative: Petschner, Goetz

(57) **Abstract**

A computer input device including a housing (21) a tracking ball mounted with the housing, at least a button (26) mounted on the housing and a circuit board received in the housing. The housing is formed with a through hole (27) for at least one user's finger to insert therethrough and is with a size smaller than a user's palm, such that the computer input device can be maneuvered on a mouse pad simply by means of the user's fingers without the use of the user's palm.

## Description

### BACKGROUND OF THE INVENTION

### 1. Field of the Invention

This invention relates to computer input devices and, more particularly, to a computer input device coupled to a computer for execution of commands.

### 2. Background of the Invention

As a result of the fast development of information technology, computer has played a major role in human daily life. Users can execute commands by using a mouse instead of a keyboard to pick up or "click" the options or icons provided in an operation system installed in the computer. As the mouse provides the user with a more convenient tool than the keyboard for operating the computer, it has become an essential peripheral equipment for personal computer.

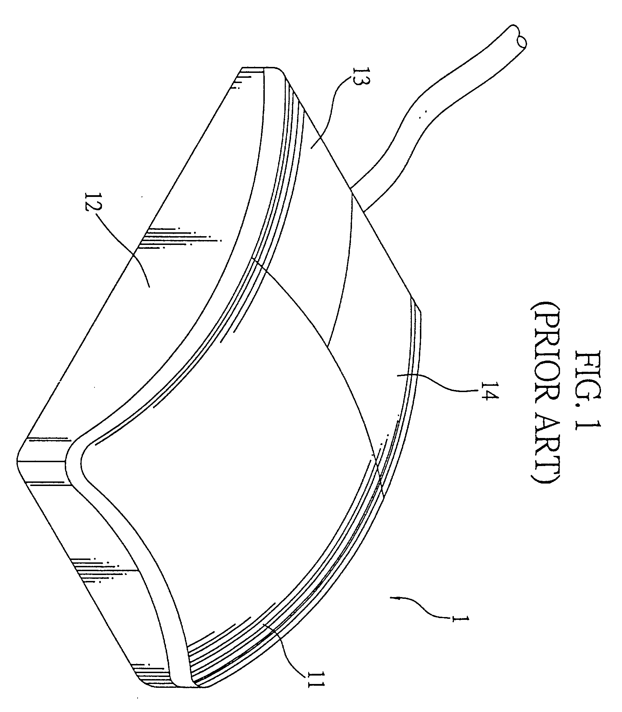

Referring to FIG. 1, a conventional mouse typically has a housing 1 which includes a upper cover 11 and an opposing bottom cover 12. The front portion of the upper cover 11 is furnished with a left button 13 and a right button 14 for executing commands by a user's hand. To prepare to operate the mouse, a user needs to hold the housing 1 by his/her hand, having his/her index and middle fingers respectively resting on the left button 13 and the right button 14 while having his/her thumb and little fingers positioned at opposite sides of the housing 1. Then, the mouse can be maneuvered on a mouse pad by user's hand.

One problem arising from the maneuvering of the mouse on the mouse pad by user's hand, however, is that the control of the moving direction of the mouse requires the coordination of the palm, the wrist, the arm and sometimes, even the elbow of the user's hand. This could cause trouble, such as "carpal tunnel syndrome", to user's palm, wrist and arm on nerve and muscle after a long period of time in operating the mouse. Furthermore, the shape of the conventional mouse is designed to be adapted to fit the user's palm so that conventional mouse are redundant in size when in consideration of the overall size of the components mounted inside the housing of the mouse.

### SUMMARY OF THE INVENTION

It is therefore an objective of the invention to provide a computer input device which can help prevent the nerve and muscle of the user's hand from being hurt during long-hour operation of the computer input device.

It is another objective of the invention to provide a computer input device which can be operated by means of user's fingers only without the need of user's palm such that the computer input device can be reduced in size and less laborious in operation than the prior art.

In accordance with the foregoing and other objectives, the invention proposes improved computer input device. The computer input device includes a housing having a through hole for at least a user's finger to insert therethrough in a manner that the computer input device can be maneuvered on a surface by means of the user's finger coupled with the through hole; the housing is with a size smaller than the user's palm, thereby allowing the housing to be held by the user's fingers. The housing further has at least a button formed on the surface thereof. On the bottom of the housing a sensor device is mounted in a manner that a part of the sensor device is exposed to the exterior of the housing and the other part thereof is received in the interior of the housing. In addition, a circuit board having electronic devices and electric circuits formed thereon is received in the housing for cooperating with the sensor device.

In one embodiment of the invention, the through hole is formed from an upper surface to a lower surface of the housing, allowing the user's finger to insert into the through hole in a manner that the finger tip points downwards toward the mouse pad under the computer input device of the invention.

In another embodiment of the invention, the housing includes a first portion for receiving the tracking ball and the circuit board, and a second portion separably coupled to the first portion and having a groove, thereby allowing the groove together with the surface of the first portion corresponding to the groove to define the through hole for at least a user's finger to insert thereinto, after the second portion to coupled to the first portion.

In a further embodiment, on at least one side of the housing a resting protrusion is formed in order for another user's finger adjacent to the one inserted into the through hole to abut against the resting protrusion to thereby enhance the controllability of the computer input device by means of the user's fingers.

### BRIEF DESCRIPTION OF THE DRAWINGS

The foregoing features of the invention can be more fully understood by reading the following detailed description of the preferred embodiments, with reference to accompanying drawings, wherein:
FIG. 1 is a perspective view of a conventional mouse;
FIG. 2 is a perspective view of a first preferred embodiment of the computer input device in accordance with the present invention.
FIG. 3 is a side view of the computer input device according to FIG. 2.
FIG. 4 is a schematic view showing the computer input device of the invention which is operated by user's fingers;
FIG. 5 is a perspective view of a second preferred embodiment of the computer input device in accordance with the present invention;
FIG. 6 is an exploded perspective view of the computer input device according to FIG. 5; and
FIG. 7 is a front view of a third preferred embodiment of the computer input device in accordance with the present invention.

### DESCRIPTION OF THE PREFERRED EMBODIMENT

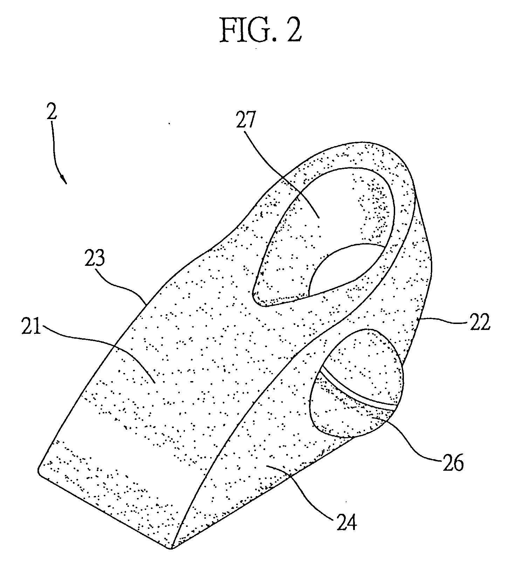

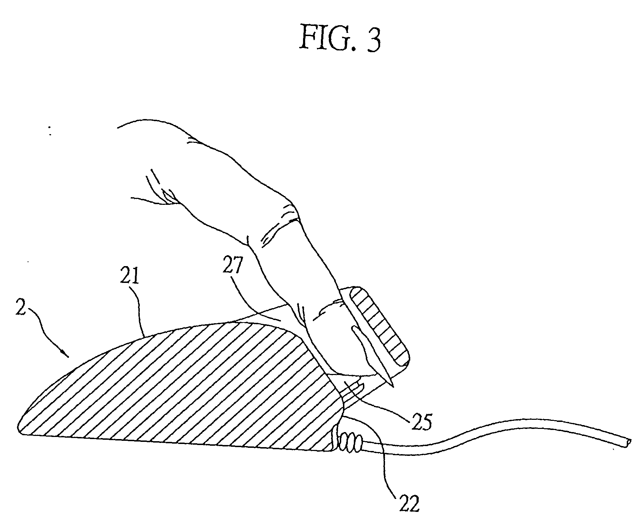

Referring to FIGs. 2 and 3, the first preferred embodiment of the computer input device in accordance with the present invention is shown. The computer input device is typically a mouse and comprises: a housing 2, a first button 26 mounted on one side surface of the housing 2 and a second button 25 is adapted to be mounted in a through hole 7 formed in the housing 2. The housing 2 further comprises a tracking ball and a circuit board for cooperating with the tracking ball which are both not shown in the drawings, as the tracking ball and the circuit board are well-known to persons skilled in the art. Of course, a set of conventional electronic-optical sensors can be used in lieu of the tracking ball. Moreover, the housing 2 has a lower surface 22, an upper surface 21, a first side surface 23 and an opposing second side surface 24. The tracking ball is partially received within the housing 2 while having a part thereof exposed to the exterior of the housing 2 through a bottom opening (not shown) formed on the bottom of the housing 2. The through hole 27 is formed from the upper surface 21 to the lower surface 22 of the housing 2 and is diametrically capable of accommodating at least the user's index finger, allowing the computer input device of the invention to be controlled and moved easily on a surface (not shown) by the finger engaged within the through hole 27. As shown in FIG. 3, the second button 25 is furnished on an inner surface of the hole 27such that the index finger sleeved in the through hole 27 can click or push the second button 25. The first button 26 is mounted on the second side surface 24.

However, it should be noted that the first button 26 can also be mounted on the first side surface 23. There is no specific limitation to the mounting position of the first button 26. Furthermore, on the first side surface 23 and the second side surface 24 can be each mounted with a button, if necessary.

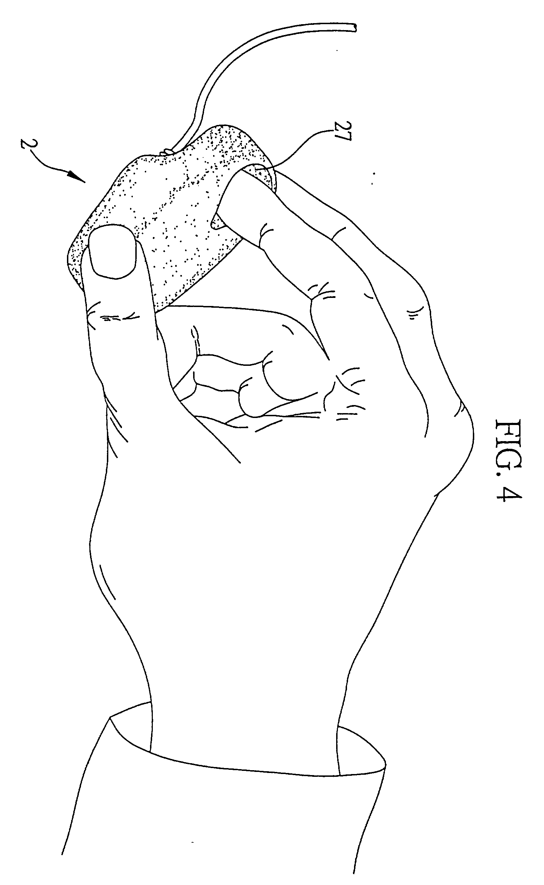

Referring to FIG. 4, when operating the computer input device of the first preferred embodiment, the user can simply position the thumb by the first side surface 23 and the middle finger by the second side surface 24, while inserting the index finger into the through hole 27. As a result, it only needs user's fingers to control, operate and move the computer input device without having to use user's palm to hold the same. For this reason, it causes almost no hurt to user's nerve and muscle of the hand for a long-hour operation. Since the size and shape of the mouse do not need to adapt to the user's palm, the computer input device of the present invention can be greatly reduced in size and weight when compared to the prior art.

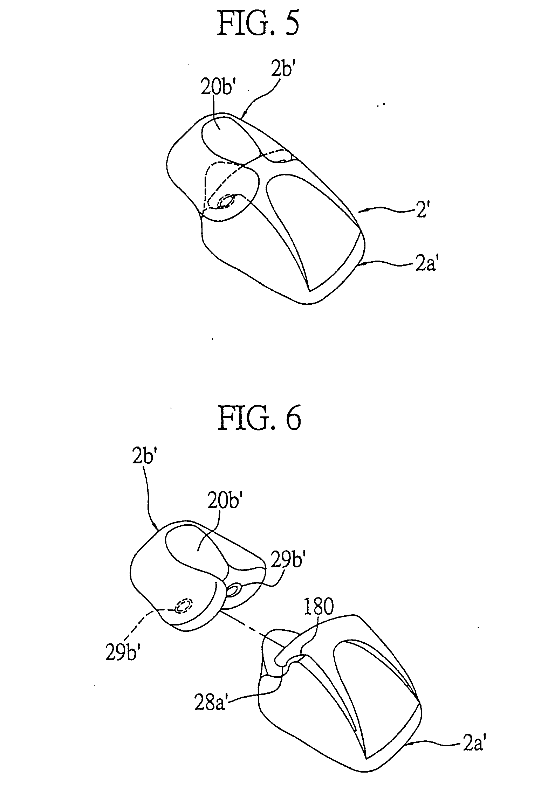

FIGs. 5 and 6 illustrate the second preferred embodiment of the computer input device of the invention.

The computer input device of the second preferred embodiment differs from the previous one only in the housing which is designated with a reference numeral 2' in this embodiment. The housing 2' consists of a first portion 2a' and a second portion 2b' separably coupled to the first portion 2a'. The first portion 2a' is provided in a predetermined position with a pair of engaging protrusions 28a' for engagement with a pair of corresponding engaging holes 29b' formed on the second portion 2b' by the engagement of the engaging protrusions 28a' with the engaging holes 29b' the second portion 2b' can be firmly coupled to the first portion 2a'. Moreover, the second portion 2b' is formed with a groove 20b' having a diameter sufficient to receive at least one of the user's fingers. This allows the groove 20b' together with the surface of the first portion 2a' corresponding to the groove 20b' to define the through hole for at least one of the user's fingers to insert thereinto.

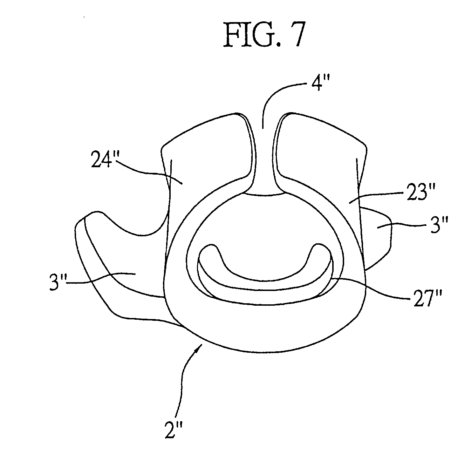

FIG. 7 is a front view of the third preferred embodiment of the computer input device of the invention.

As shown in FIG. 7, the computer input device of the third preferred embodiment differs from the first one in that the side surfaces 23", 24" of the housing 2" are integrally formed with a pair of opposing resting protrusions 3". The resting protrusions 3" permits the user's fingers to abut so as to provide the computer input device of this preferred embodiment with an improved controllability by means of the user's fingers. Moreover, the housing 2" is formed with a slot 4" connected to the through hole 27". This allows the through hole 27" to have a greater flexibility of receiving the user's finger(s).

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded to the broadest interpretation so as to encompass all such modifications and similar arrangements.

## Claims

1. A computer input device, comprising:
a housing having a through hole for at least one user's finger to insert therethrough in a manner that the computer input device can be maneuvered on a surface by means of the user's finger inserted into the through hole;
at least a button mounted on the housing;
a sensor device mounted in the housing; and
a circuit board mounted in the housing for cooperating with the sensor device.

2. The computer input device of claim 1, wherein the button is mounted inside the through hole.

3. The computer input device of claim 1, wehrein the button is mounted outside the through hole.

4. The computer input device of claim 1, wherein the button is mounted on a side surface of the housing.

5. The computer input device of claim 1, wehrein the housing is with a size smaller than the user's palm.

6. The computer input device of claim 1, wherein the housing is formed with at least one resting protrusion.

7. The computer input device of claim 1, wherein the housing is further formed with a slot connected to the through hole.

8. The computer input device of claim 1, wherein the sensor device is a tracking ball.

9. The computer input device of claim 1, wherein the sensor device is a set of electronic-optical sensors.

10. A computer input device, comprising:
a housing having a first portion and a second portion separably coupled to the first portion, the second portion being formed with a groove having a diameter sufficient to receive at least one user's finger;
at least a button mounted on the housing;
a sensor device mounted in the housing; and
a circuit board mounted in the housing for cooperating with the sensor device.

11. The computer input device of claim 10, wherein the button is mounted on a surface of the first portion corresponding to the groove of the second portion after the second portion is coupled to the first portion in position.

12. The computer input device of claim 10, wherein the button is mounted on a side surface of the first portion.

13. The computer input device of claim10, wherein the housing is formed with at least one resting protrusion.

14. The computer input device of claim 10, wherein the first portion is formed with a pair of engaging protrusions while the second portion is formed with a pair of engaging holes for the engagement with the engaging protrusions of the first portion.

15. The computer input device of claim 10, wherein the sensor device is a tracking ball.

16. The computer input device of claim 10, wherein the sensor device is a set of electronic-optical sensors.

17. The computer input device of claim 10, wehrein the housing is with a size smaller than the user's palm.
